# EUROPEAN PATENT SPECIFICATION

(11) **EP 4 075 945 B1**
(45) Date of publication and mention of the grant of the patent: **22.11.2023**
(21) Application number: 20829936.2
(22) Date of filing: 18.12.2020
(51) Int. Cl.: A01G 9/14

(54) **TWO-WAY HORTICULTURE TROLLEY WITH INDIVIDUALLY TURNABLE FLOOR-WHEELS**
ZWEIWEGE-GARTENBAUWAGEN MIT EINZELN SCHWENKBAREN BODENRÄDERN
CHARIOT D'HORTICULTURE À DOUBLE SENS AVEC ROUES AU SOL PIVOTANTES INDIVIDUELLEMENT

(30) Priority: 20.12.2019 NL 2024540
(43) Date of publication of application: 26.10.2022
(73) Proprietor: Berg Groep B.V., 2678 KZ De Lier (NL)
(72) Inventor: VAN MIL, Thomas, 2678 KZ DE LIER (NL); NIBBELINK, Stef, 2678 KZ DE LIER (NL); VAN DEN BERG, Mark, 2678 KZ DE LIER (NL); VAN DER HOEVEN, Dennis, 2678 KZ DE LIER (NL)
(74) Representative: EP&C
(86) International application number: PCT/EP2020/087203
(87) International publication number: WO 2021/123296

(56) References cited:
- EP-A1- 1 327 602
- EP-A1- 2 664 232
- NL-C2- 1 032 031
- NL-C2- 2 009 716

## Description

### FIELD OF THE INVENTION

The present invention relates to horticulture trolleys that are suitable for driving in different directions over different heights and/or types of surfaces, like paved floors and pipe-rails.

### BACKGROUND TO THE INVENTION

Such two-way trolleys are well known in horticulture to be used during the growing of plants for all kinds of operations, like crop care, protection and harvesting. For example greenhouses for the commercial growing and/or harvesting of plants, mostly have a standard lay-out with a concrete corridor and a large number of track paths perpendicular thereto with rows of plants growing at both sides thereof. Along each track path a guiding track extends, for example in the form of a pair of pipe-rails, that in particular serve as heating pipe. At head end parts of such pipe-rail tracks, turn-around pipe portions that connect left and right ones of the pairs of pipe-rails are frequently present such that a heating medium can flow from one of the pipe-rails towards another. The pipe-rails rest upon support feet such that they are supported spaced above a ground surface of the track paths. The head end parts rest upon the corridor, such that their upper guiding surfaces lie at a higher level than a running surface of the corridor, particularly over a distance in a vertical direction that is equal to a diameter of the pipe-rails.

During growing of the plants, the trolleys can be used for performing all kinds of operations thereto, while being slowly or stepwise driven over the pipe-rails. When a track path is done, the trolley can be switched towards another track path. The trolley then temporarily gets pushed sideways over the concrete corridor, that mostly extends perpendicular to a longitudinal direction of the pipe-rails. For this two-way usage, the trolley can be equipped with dedicated non-swivable driven track-wheels for driving over the pipe-rails and with dedicated swivable non-driven floor-wheels for driving over the concrete corridor.

It is known to have left and right ones of the track- and floor-wheels form part of so-called flange wheels of which an outer flange portion forms a first tread with a relative large diameter, and of which an inner cylinder portion forms a second tread with a relative small diameter. The outer flange portions are destined to form the floor-wheels and be driven with their treads over the concrete corridor, whereas the inner cylinder portions are destined to form the track-wheels and be driven with their treads over the pipe-rails. During this driving over the pipe-rails, the outer flange portions prevent that the trolley may run sideways of the pipe-rails by locking up the left and right pipe-rails between them.

It is then also known to have additional sets of non-driven floor-wheels suspended such that they are movable up and down between an inactive position in which the trolley rests upon the flange wheels and an active position in which the trolley rests upon the additional sets of floor-wheels.

Each time during a transit from driving over a pair of pipe-rails along one track path towards another pair of pipe-rails along another track path, the additional sets of floor-wheels need to be actively moved down towards their active position such that the trolley can then be manually pushed sideways over the concrete corridor towards the other pair of pipe-rails. This is time-consuming and requires quite an effort of an operator.

NL-2009716 shows a trolley with a backside set of driven flange wheels, a front side set of non-driven flange wheels, and a front set of steerable swivelling floor-wheels. The treads of the swivelling floor-wheels have larger diameters than the treads of the outer flange portions of the front side non-driven flange wheels. The steerable swivelling floor-wheels are for example steerable by means of a joystick. Thus it is possible for an operator to drive and steer the trolley over the corridor, including during transits towards other pairs of pipe-rails, while this operator remains standing on a platform of the trolley.

A disadvantage hereof is that the trolley can only be properly manoeuvred when enough floor space is available, particularly wide enough corridors. For that it may even be necessary to move the trolley back and forth a number of times in order to gradually have it displaced sideways and get it properly outlined in front of an adjacent pair of pipe-rails. Another disadvantage is that during those turning movements the flange portions of the backside set of driven flange wheels may easily damage the floor or get damaged themselves.

NL-1032031 also shows a trolley with a backside set of driven flange wheels, a front side set of non-driven flange wheels, and a front set of two steerable swivelling floor-wheels.

Here the same disadvantages go as mentioned for NL-2009716.

### BRIEF DESCRIPTION OF THE INVENTION

The present invention aims to overcome those disadvantages at least partly or to provide a usable alternative. In particular the present invention aims to provide a fully safe and reliable two-way horticulture trolley that is particularly capable of repeatedly having the trolley transit via a corridor towards another one of tracks that extend in between and along rows of growing plants, in an efficient and quick manner and without damaging floors or the like.

According to the present invention this aim is achieved by a two-way horticulture trolley for driving in different directions over different heights and/or types of surfaces, like paved floors and pipe-rails, according to claim 1. The trolley comprises a frame, track-wheels for driving the trolley forward or backwards in a first direction over tracks, like pipe-rails, that extend in the first direction in between and along plant growing paths, floor-wheels for driving the trolley sideways in a second direction over a corridor, like a paved floor, that extends in the second direction along ends of the tracks, one or more driving motors configured to rotate the track- and/or floor-wheels around their horizontal center axis for driving the trolley forward or backwards respectively sideways, and a control unit for controlling the one or more driving motors. According to the inventive thought the floor-wheels are each individually turnable around an own vertical axis relative to the frame between at least the first and second direction, wherein one or more turning actuators are provided for controlling the floor-wheels to turn individually around their own vertical axis between at least the first and second direction and vice versa.

Thus the invention advantageously makes it possible to easily and quickly manoeuvre the trolley even when limited floor space is available, like narrow or crowded corridors. It is no longer necessary to move the trolley back and forth a number of times in order to gradually have it displaced sideways and get it properly outlined in front of an adjacent pair of pipe-rails. This can now easily be done by means of the individually turnable floor-wheels. If desired it is even possible to have the trolley operate completely autonomously. The control unit is able to automatically drive the trolley onto the corridor when coming from the track and vice versa, and automatically move it from path to path during those transitions by means of proper individual steering and driving of the floor-wheels. During turning movements, the track-wheels no longer are able to damage the floor of the corridor or get damaged themselves. The invention is based on the insight that all this can been done with a configuration of individually turnable floor-wheels, and in particular the angles and directions in which they may get individually turned during leaving and approaching of head end parts of the tracks.

In a preferred embodiment the control unit can be configured to, as many times as is desired, for example as many times as there are track paths to be switched between, each time that the trolley is driven with its track-wheels off one of the head end parts of the tracks, to autonomously control the one or more driving motors to perform the following steps:
- to turn and rotate the floor-wheels for driving the trolley sideways in the second direction over the corridor over a pre-programmed distance;
- to turn the floor-wheels back and rotate the track- and/or floor-wheels for driving the trolley forward in the first direction over the corridor until an adjacent one of the head end parts of the tracks is present in front of the track-wheels; and
- to turn and rotate the floor-wheels for driving the trolley sideways in the second direction over the corridor until the track-wheels are lined-up with left and right portions of the track.

This makes it possible to have the control unit autonomously repeat the following steps a number of times:
- have the trolley drive one or more times forward and backward in the first direction with its track-wheels over one of the tracks in between and along growing plants;
- have the trolley drive backwards in the first direction with its track-wheels off the head end part of that track and with its floor-wheels onto the corridor while carrying the trolley;
- have the floor-wheels turned to a position steering in the second direction;
- have the trolley drive sideways in the second direction with its floor-wheels over the corridor over a pre-programmed distance;
- have the floor-wheels turned to a position steering in the first direction;
- have the trolley drive forward in the first direction with its floor-wheels over the corridor until one of the head end parts of another one of the tracks is present in front of the track-wheels;
- have the floor-wheels turned to a position steering in the second direction;
- have the trolley drive sideways in the second direction with its floor-wheels over the corridor until the track-wheels are lined-up with left and right portions of that other one of the tracks;
- have the floor-wheels turned to a position steering in the first direction;
- have the trolley drive forward in the first direction off the corridor and with its track-wheels onto the head end part of that other one of the tracks; and
- have the trolley drive one or more times forward and backward in the first direction with its track-wheels over that other one of the tracks in between and along growing plants.

This advantageously makes it possible to fully reliably and quickly have the trolley automatically perform line-up positionings during transitions between track paths, after which the trolley can be controlled to also automatically drive forward off the corridor and onto the track. An operator is not needed to be present for this. The trolley can do this all by itself autonomously without human help, although it is noted that an operator may also actively drive and steer the trolley by himself.

The trolley for example may comprise a data collector for automatically collecting health, growth and/or harvest data of the rows of plants the trolley drives past. Owing to a smooth and reliable autonomous operation mode, such measurements can now also safely run outside normal working hours, like at night or during weekends. Thanks to this a grower may get clear insight in his plants at each specific location in the greenhouse without having to disrupt any other activities of its employees.

The data collector may use special cameras to measure and map the plants, particularly fruits and vegetables growing from the plants. Images made by the cameras can be analysed on the spot by special software and/or displayed on a grower's screen.

The trolley then is able to measure large areas of plants, particularly the fruits and vegetables growing from the plants, like trusses of hanging tomatoes, while counting both quantity and maturity. The trolley is able to do that autonomously as frequently as desired, like every night, and always in exactly the same way. This makes the trolley a perfect sensing instrument that provides insight into numbers and colour stages. Linking this information to practical data from a greenhouse makes an accurate estimation of harvest possible. This allows a grower to ensure a high level of delivery reliability. That, in turn, allows the grower to make better price agreements and realize higher profit margins.

In a preferred embodiment each of the floor-wheels can be mounted underneath on an own turntable that is turnable around a center axis relative to the frame between at least the first and second direction, and which center axis of the turntable corresponds to said own vertical axis for each of the floor wheels to turn around. The turntable can be suitably supported in a first bearing to be easily and smoothly be turnable relative to the frame around its vertical center turning axis, whereas the horizontal rotation axis of the respective floor-wheel then can be suitably supported in a second bearing to be easily and smoothly be driven in rotation.

In another preferred embodiment each of the floor-wheels may lie eccentrically relative to said own vertical axis for each of the floor-wheels to turn around. This makes it possible to obtain space for other components to also be positioned near and possibly also co-turnable around the own vertical axis, like an own individual turning actuator and/or driving motor.

In addition thereto each of the floor-wheels preferably may lie further away from a center point of the frame than said own vertical axis for each of the floor wheels to turn around, such that left and right ones of the floor-wheels may lie at maximum width from each other when both turned in the first direction, and such that front and back ones of the floor-wheels may lie at maximum distance from each other when turned in the second direction. This helps to keep the trolley stable during turning operations as well as during driving, which is critical for safe operation.

In addition thereto each of the floor-wheels may be turnable over maximum 90 degrees, with the first and second directions as outer limits. This adds safety in that it helps to prevent the trolley from becoming unstable. Furthermore it helps to prevent that the floor-wheels may get turned such far underneath the frame that they may otherwise bump against other vulnerable components that also might be positioned there.

In a preferred embodiment the control unit can be configured to individually turn a left-front-side and a right-back-side ones of the floor-wheels in a clockwise direction, and to individually turn a right-front-side and a left-back-side one of the floor-wheels in a counter-clockwise direction, and vice versa, during their individual turnings around their own vertical axis relative to the frame between at least the first and second direction. This keeps the trolley compact and stable.

In another preferred embodiment side walls of the frame can be provided with cut-outs for the floor-wheels to extend through during their turning movements. Thus the side walls on the one hand protect the components underneath the frame, while also giving space for the floor-wheels to turn and make it visible for everyone in which direction they are orientated such that they can anticipate the trolley's next possible driving direction.

The individual turning of the floor-wheels can be done with the aid of one and the same driving motor and suitable transmissions towards each of the turning actuators. Preferably however for each of the floor-wheels an individual turning actuator can be provided, in particular a stepper motor. This makes it possible to individually steer the floor-wheels, which may be advantageous during other manoeuvres of the trolley over the corridor or other paved floors, for example towards a parking location where it can automatically charge its batteries.

Preferably each floor wheel then may comprise a flexible rubber tire as tread. This prevents the corridor to get damaged during turnings of the floor-wheels.

Likewise, it is noted that the driving of the floor-wheels can be done with the aid of one and the same driving motor and suitable transmissions towards each of the wheels. Preferably however for each of the floor-wheels an individual driving motor can be provided that is co-turnable therewith.

In a preferred embodiment the frame typically may have an elongate shape, in particular rectangular, underneath which a front and back set of track-wheels is provided, and underneath which a front and back set of floor-wheels is provided. Other shapes are however also possible.

Preferably at least some of the track-wheels are formed by flange wheels that each comprise a cylindrical roller part and a flange part, and wherein an outer diameter of the floor-wheels is larger than an outer diameter of the flange parts. Thus it is guaranteed that as soon as all the track-wheels have left the track, that the floor-wheels together then get to carry the entire weight of the trolley.

Further preferred embodiments of the invention are stated in the dependent subclaims.

### DETAILED DESCRIPTION OF THE DRAWINGS

The invention shall be explained in more detail below with reference to the accompanying drawing in which:
- Fig. 1a and 1b show top and bottom perspective views of an embodiment of a two-way horticulture trolley according to the invention with floor-wheels turned for driving in X-direction;
- Fig. 2 shows the bottom perspective view of fig. 1b with the floor-wheels individually turned over plus and minus 90 degrees for driving in Y-direction;
- Fig. 3a-i show a transit of the trolley from one pair of pipe-rails, via a paved corridor, towards another pair of pipe-rails including the two-step line-up; and
- Fig. 4a and 4b show the top and bottom perspective views of fig. 1a and 1b with the floor-wheels individually turned over plus and minus 45 degrees for turning its frame around its central axis.

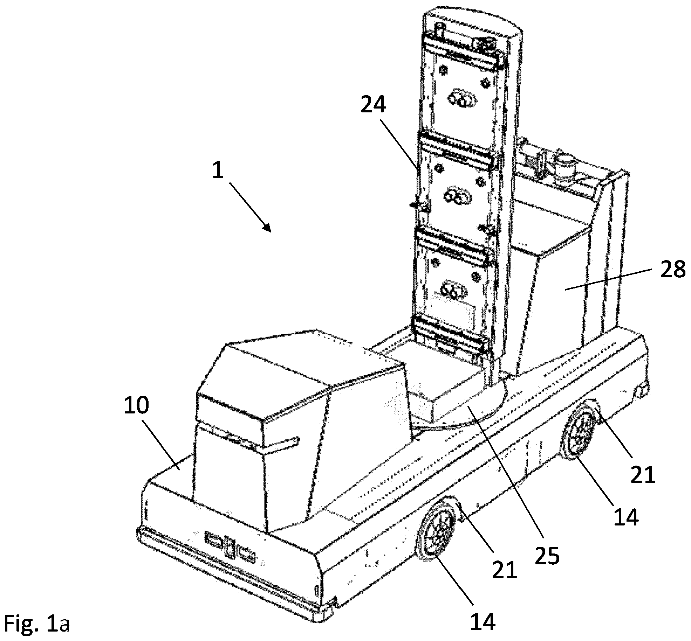

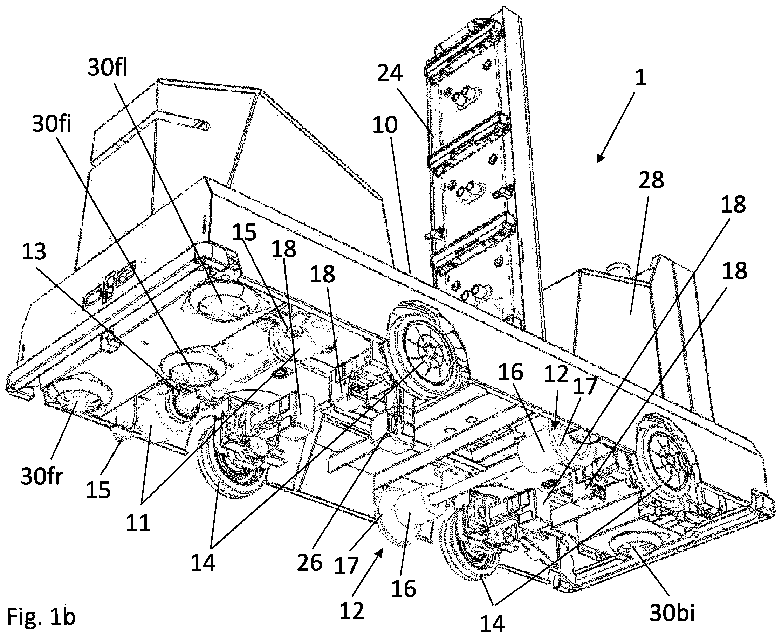

In fig. 1a and b an electrically powered horticulture pipe-rail trolley is shown that has been given the reference numeral 1. The trolley 1 comprises an elongate, substantially rectangular shaped frame 10 underneath which two sets of track-wheels 11, 12 for driving the trolley 1 over tracks, and two sets of floor-wheels 14 for driving the trolley 1 over floors, are provided.

The front set of track-wheels 11 is formed by two cylindrical rollers that are rotatable around a common horizontal center axis, and that are provided at a front side of the trolley 1. A controllable driving electromotor 13 is provided for rotating the front set of track-wheels 11 around their common horizontal center axis for driving the trolley forward or backwards over a track. Left and right guiding rollers 15 are positioned just in front of the rollers for keeping the front side of the trolley 1 centred on a track during driving over such a track and for at a same time protecting front left and right ones of the floor-wheels 14 from rubbing against sidewalls of such a track.

The back set of track-wheels 12 is formed by two flange wheels that are freely rotatable around a common horizontal center axis, and that are provided at a back side of the trolley 1. The back set of track-wheels 12 is non-driven and merely serve to help carry the trolley 1 when it is driven over a track. Each flange wheel comprises a cylindrical roller part 16 and an outer flange part 17. The flange parts 17 are positioned spaced at a distance that is slightly larger than an outer width of the tracks for keeping the back side of the trolley 1 centred on a track during driving over such a track and for at a same time protecting back left and right ones of the floor-wheels 14 from rubbing against sidewalls of such a track.

Each of the four floor-wheels 14 is rotatable around its own horizontal center axis and comprises its own flexible rubber tire as tread. The outer diameter of the floor-wheels 14 is larger than the outer diameter of the outer flange parts 17. Each of the floor-wheels 14 comprises an own controllable driving electromotor 18, preferably a controllable stepper motor, that is provided for rotating their respective floor-wheel around its own horizontal center axis for driving the trolley 1 over a floor.

Each of the floor-wheels 14 together with its own controllable driving electromotor 18 is mounted on an own turntable 20 via which it is turnable around an own vertical axis for steering their respective floor-wheel 14 in aimed directions. The turnability of the turntables 20 here goes from -50 degrees to 105 degrees.

A turning actuator, preferably an own controllable stepper motor, is provided for each of the turntables 20 as individual turning actuator for controlling their respective floor-wheels 14 to turn individually around its own vertical axis. The turning actuators can also be mounted on their own respective turntables 20. In the embodiment shown the turning actuators are provided above the turntables 20 at positions more inside the frame 10.

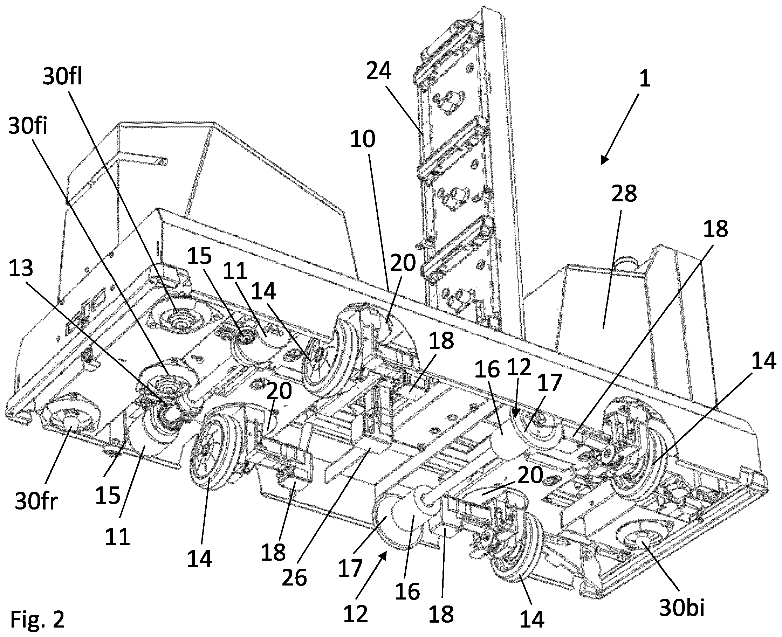

In fig. 2 a situation is shown in which each of the four turntables 20, with its own respective set of floor-wheel 14, driving electromotor 18 and turning actuator, has been turned individually around its own vertical axis over turning angles of 90 degrees. This makes it possible for the trolley 1 to be driven sideways.

The floor-wheels 14 are provided eccentrically underneath their turntables 20. In their fig. 1 position they are orientated in line with a longitudinal axis of the trolley 1. The trolley 1 then can be driven forward or backward. In their fig. 2 position they are orientated transverse to the longitudinal axis of the trolley 1. The trolley 1 then can be driven sideways.

It is foreseen to have each of the floor-wheels 14 turned clockwise or counter-clockwise between their fig. 1 and 2 positions in such a way that the stability of the trolley 1 does not get negatively influenced. For that the left-front-side and right-back-side floor-wheels 14 get turned clockwise (seen from above), and the right-front-side and left-back-side floor-wheels 14 get turned counter-clockwise (seen from above) when getting forced by their turning actuators to turn from the fig. 1 towards the fig. 2 positions, and vice versa, when getting forced to turn back again. This causes the front and back floor-wheels 14 to be turned such that in their fig. 1 positions their left and right ones lie at maximum width from each other, and in the fig. 2 positions their front and back ones lie at maximum distance from each other.

In order for the floor-wheels 14 to not get blocked by side walls of the frame 10 during those turnings, the side walls are provided with semi-circular cut-outs 21.

On top of the frame 10 a data collector 24 is provided that comprises an upright standing column mounted on a turnable platform 25 and equipped with a number of cameras and flash lights above each other. A turning actuator, preferably also a controllable stepper motor, is provided underneath the frame 10 for the turnable platform as turning actuator for controlling the platform 25 to turn individually around its own vertical axis. The data collector 24 is configured for automatically collecting health, growth and/or harvest data of plants along which the trolley 1 drives past during operation. In the alternative other kinds of autonomous operation units can also be provided on top of the frame 10, like a leaf cutter, harvesting or spraying robot.

The trolley 1 comprises a programmable control unit 28 that has a storage medium for storing machine readable instructions. The control unit 28 is configured for controlling the driving electromotors and the turning actuators. The trolley comprises one or more rechargeable batteries for energizing the respective driving electromotors and turning actuators, and possibly also for energizing other electrical equipment that might be provided on the trolley 1.

The trolley 1 can thus be driven at a safe speed over tracks that extend along track paths in between rows of plants to perform an aimed operation like said data collection in between the rows of plants, especially in high-wire crops. The trolley 1 can thus also reliably be driven at a safe speed over floors, like corridors that extend along head end parts of the tracks.

A detector unit with a total of four track detectors 30 is provided underneath the frame 10. Each of the track detectors 30 comprises an inductive sensor covered by a dish-shaped cover plate and configured to detect whether or not a part of a metal track lies straight underneath them and for sending corresponding detection signals to the control unit 28.

Front left and right track detectors 30fl and 30fr are positioned underneath a front end of the frame 10 straight in front of the left and right track-wheels 11 at a spaced distance. A front intermediate track detector 30fi is also positioned underneath the front end of the frame 10 and lies in a same horizontal face as the front left and right track detectors 30fl, 30fr. The three front track detectors 30fl, 30fr, 30fi lie at corners of an imaginary triangle that points backwards.

A back intermediate track detector 30bi is positioned underneath a back end of the frame 10 and lies in a same horizontal face as the front track detectors 30fl, 30fr. The back intermediate track detector 30bi lies at a same longitudinal center line of the trolley 1 as the front intermediate track detector 30fi.

The control unit 28 is configured for determining all kinds of positions of the trolley 1 relative to the tracks in dependence of detection signals it receives from the track detectors 30.

The driving electromotors 13, 18 preferably are equipped with variable-speed drives, for example of the variable-frequency generator type, and/or are equipped with sensors, like Hall-sensors, that can be used for counting numbers of rotations of the driving electromotors 13, 18 and for sending corresponding speed indication signals resp. travelling distance indication signals to the control unit 28. The control unit 28 then can also be configured to use those speed indication signals resp. travelling distance indication signals in combination with the detection signals to further determine all kinds of positions of the trolley 1 along the tracks themselves during operations like said data collection in between the rows of plants, as well as on the floor inside the greenhouse environment during for example transits between tracks.

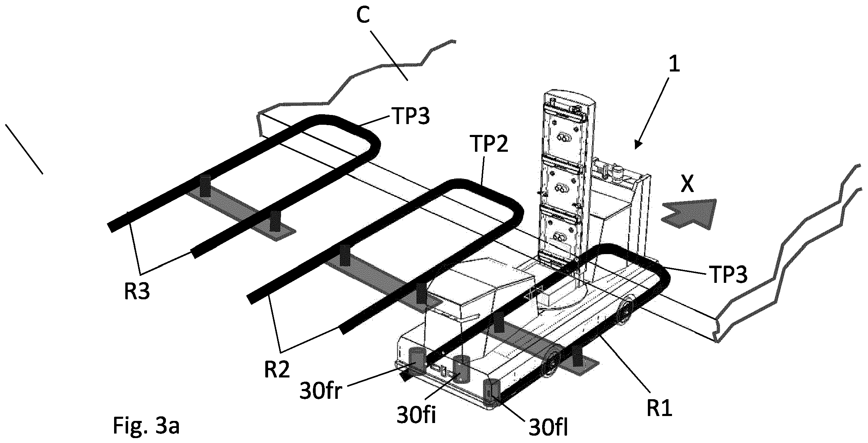

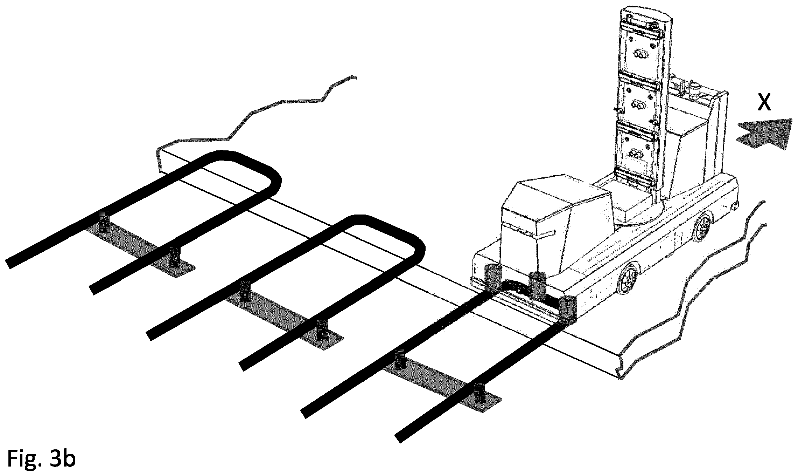

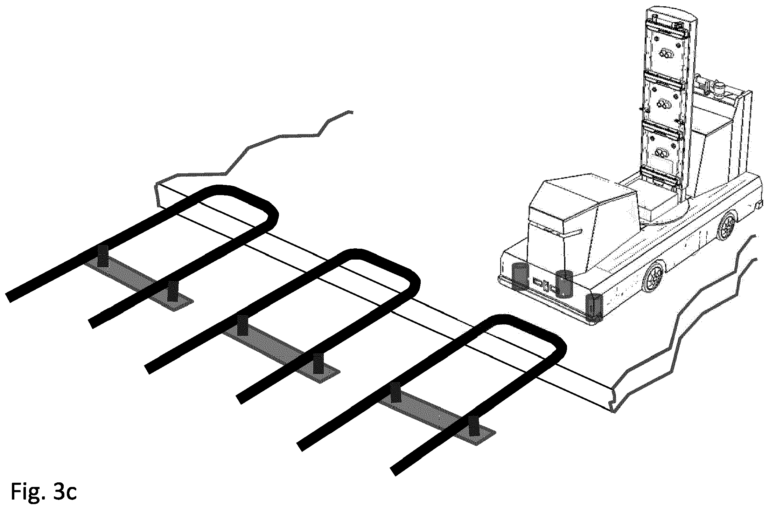

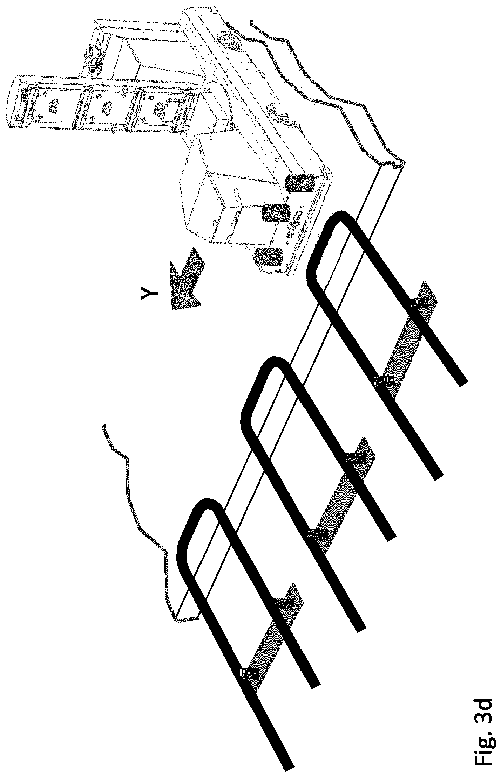

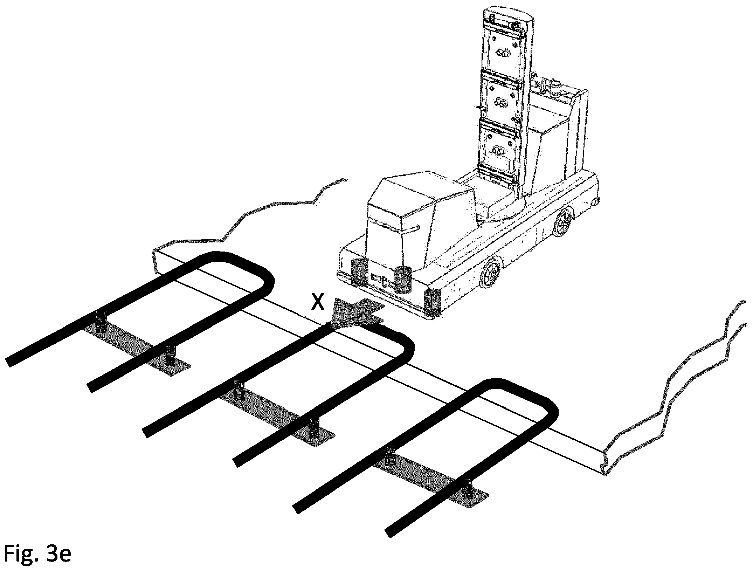

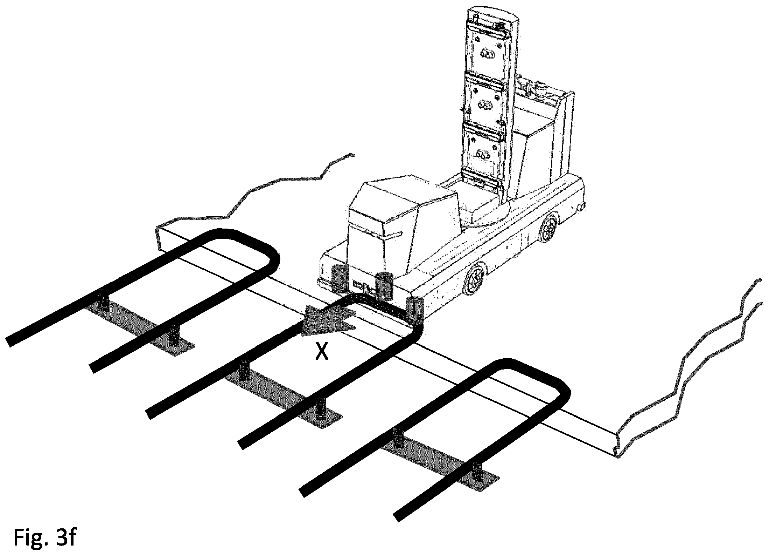

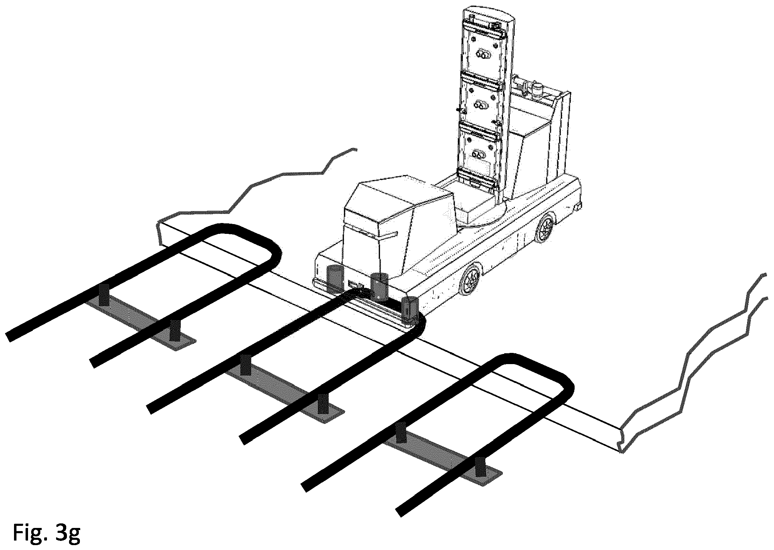

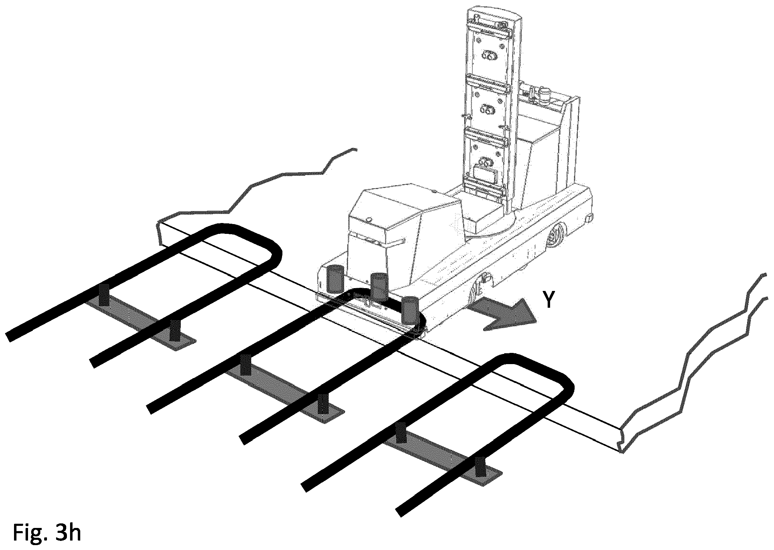

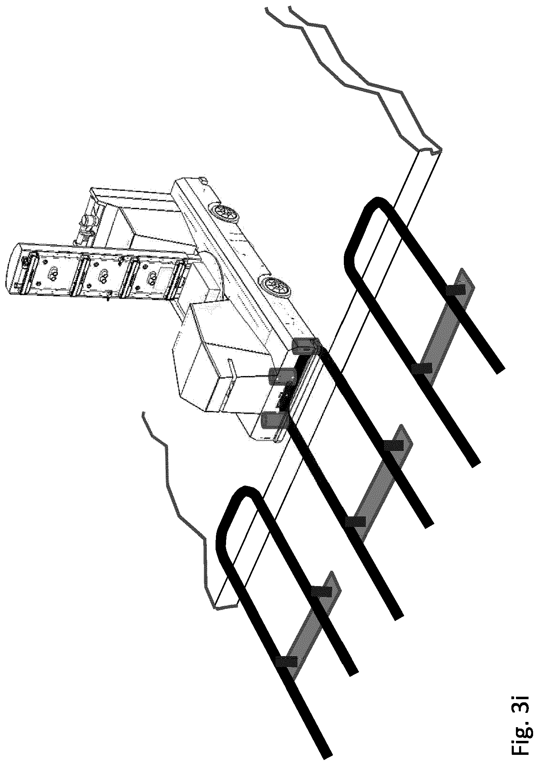

This shall be further explained with reference to fig. 3, where the trolley 1 is shown while autonomously driving in a greenhouse environment over pairs of rails R or over a corridor C. Shown are three pairs of such rails R, of which each pair has its left and right rails R connected with each other by a turn-around portion TP at its head end part. The pairs of rails R are formed here by heating pipes that extend above a cultivation floor CF in a greenhouse at regularly spaced positions. Between the pairs of rails R, cultivation paths are left free for rows of plants (not shown) to be grown. The rails R extend in horizontal directions X that are perpendicular to a horizontal direction Y along which the corridor C extends.

In fig. 3a a situation is shown in which the trolley 1 is just finishing driving itself autonomously forward over the first pair of rails R1 with the data collector 24 facing leftwards for scanning the plants growing on its left side, and backwards with the data collector 24 facing rightwards for scanning the plants growing on its right side. As soon as the back intermediate track detector 30bi then gives a detection signal to the control unit 28, the control unit 28 knows that the head end part of the rails R1 is reached and it shall slow down the driving electromotor 13 to slowly start driving off this first pair of rails R1. The control unit 28 then shall also activate at least the two back driving electromotors 18 such that the back floor-wheels 14 shall automatically help to drive the trolley 1 off the rails R1 as soon as they get enough grip onto the corridor C. With that the back floor-wheels 14 shall also lift up the back end of the trolley 1 somewhat such that the back track-wheels 12 do not get to touch the corridor C.

In fig. 3b a situation is shown in which the trolley 1 is already driving with all four floor-wheels 14 over the corridor C. With that the front floor-wheels 14 shall also lift up the front end of the trolley 1 somewhat such that the front track-wheels 11 do not get to touch the corridor C as well. As soon as all three front track detectors 30fl, 30fr, 30fi then give a detection signal to the control unit 28, the control unit 28 knows that the entire trolley 1 is about to leave the head end part TP of the rails R1 behind it. It shall then stop the driving electromotor 13 and shall have the driving electromotors 18 drive the trolley 1 further backwards in the direction X over a pre-programmed distance, for example at least 25 cm.

This situation is shown in fig. 3c. The control unit 28 then shall activate the turning actuators to turn the floor-wheels 14 over angles of 90 degrees such that they are each placed in a position steering in the direction Y.

This situation is shown in fig. 3d. Subsequently it shall activate the driving electromotors 18 to drive the trolley 1 sideways in the right direction Y with its floor-wheels 14 over the corridor C over a pre-programmed distance that corresponds with the distance towards the adjacent second pair of rails R2, for example approximately 1,6 m. The control unit 28 then shall activate the turning actuators to turn the floor-wheels 14 over angles of 90 degrees such that they are each placed in a position steering in the direction X.

This situation is shown in fig. 3e. Subsequently it shall activate the driving electromotors 18 to drive the trolley 1 with its floor-wheels 14 over the corridor C forward in the direction X. As soon as one of the front left or right detectors 30fl, 30fr (in the embodiment shown the front left track detector 30fl) then gives a detection signal to the control unit 28, the control unit 28 knows that the head end part of the rails R2 is reached.

This situation is shown in fig. 3f. The control unit 28 then shall slow down the driving electromotors 18 to slowly start driving further forwards in the direction X towards the head end part of the second pair of rails R2. As soon as the front intermediate track detector 30fi then gives a detection signal to the control unit 28, the control unit 28 knows that the primary detection situation is reached in which the front end of the trolley 1 is neatly positioned over the head end part of the rails R2, and shall stop the driving electromotors 18.

This situation is shown in fig. 3g. The control unit 28 then shall activate the turning actuators to turn the floor-wheels 14 over angles of 90 degrees such that they are each placed in a position steering in the direction Y.

This situation is shown in fig. 3h. Subsequently it shall activate the driving electromotors 18 to drive the trolley 1 sideways in the left or right direction Y (in the embodiment shown the left direction) with its floor-wheels 14 over the corridor C. As soon as both the front left track detector 30fl as well as the front right track detector 30fr then simultaneously give detection signals to the control unit 28, the control unit 28 knows that the secondary detection situation is reached in which the front track-wheels 14 are exactly lined-up with the left and right rails of the second pair of rails R, and shall stop the driving electromotors 18.The control unit 28 then shall activate the turning actuators to turn the floor-wheels 14 over angles of 90 degrees such that they are each placed in a position steering in the direction X.

This situation is shown in fig. 3i. Subsequently it shall activate the driving electromotors 18 to drive the trolley 1 with its floor-wheels 14 over the corridor C forward in the direction X. The control unit 28 shall then also activate the driving electromotor 13 such that as soon as the front track-wheels 12 lose their grip on the corridor C, the trolley 1 also gets driven forward over the rails R2 by the front track-wheels 11. As soon as the back intermediate track detector 30bi then gives a detection signal to the control unit 28, the control unit 28 knows that the trolley 1 has arrived with all four track-wheels 11, 12 on the rails R2, and it shall stop the driving electromotors 13 and 18.

The transit is then complete and the trolley 1 can drive itself autonomously forward over the second pair of rails R2 with the data collector 24 facing leftwards for scanning the plants growing on its left side, and backwards with the data collector 24 facing rightwards for scanning the plants growing on its right side. After which the above transit steps can be repeated.

Besides the forward, backward and sideways turning positions as shown in fig. 1, 2 and 3, it is also possible to have the turning actuators position them in other turning positions. Thus the trolley 1 can advantageously be controlled by the control unit 25 to navigate itself along all kinds of routes towards all kinds of locations inside the greenhouse environment.

It is also possible for the trolley 1 to manoeuvre in truly limited spaces owing to the fact that the floor-wheels 14 can be individually orientated in different directions.

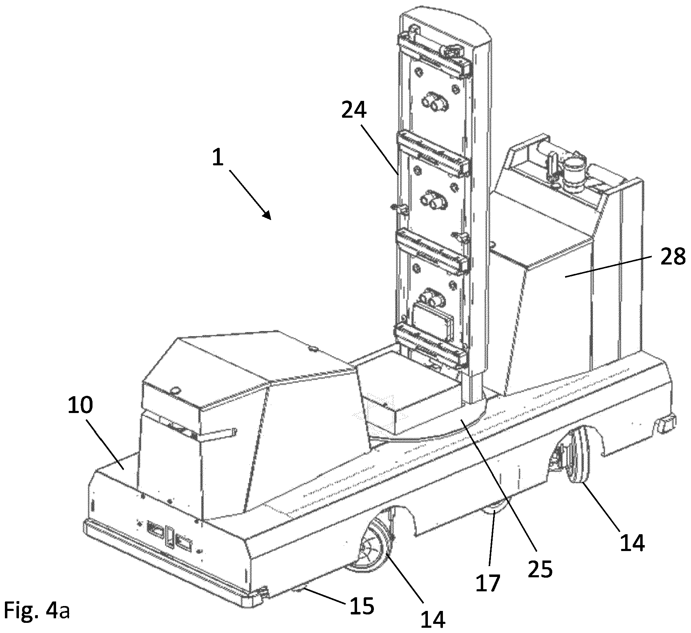

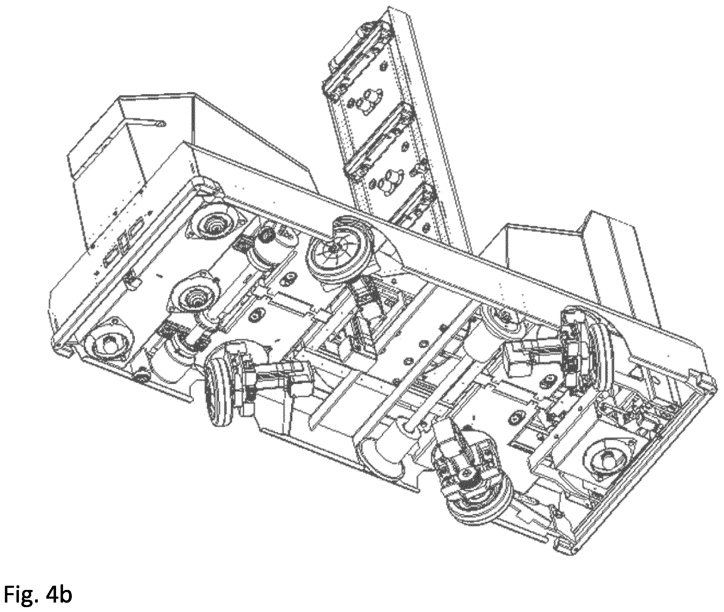

In fig. 4 a situation is shown in which each of the four turntables 20, with its own respective set of floor-wheel 14, driving electromotor 18 and turning actuator, has been turned individually around its own vertical axis over turning angles such that they all get orientated tangentially around a center point of the frame 10 of the trolley 1 (in the embodiment shown turning angles of 45 degrees). This makes it possible for the entire trolley 1 to be turned around its center point without further having to be displaced forward or backward at all. Thus the trolley 1 can change directions even in very narrow corridors or at other tight floor spaces.

Besides the shown and described embodiments, numerous variants are possible. For example the dimensions and shapes of the various parts can be altered. Also it is possible to make combinations between advantageous aspects of the shown embodiments.

All kinds of materials can be used for making the track-wheels. Preferably however they are made of plastic, like for example nylon.

Instead of using distinctive sets of track-wheels and floor-wheels it is also possible to use flange wheels of which the outer flange portions form the floor-wheels and of which the inner cylinder portions form the track-wheels. By then also making the flange wheels individually turnable by suitable controllable turning actuators around their own vertical axis relative to the frame between at least the forward/backwards direction X and the left or right sideways direction Y, the above described transit steps can also be performed.

Further it is noted that the track-wheels and floor-wheels can also be designed/dimensioned for other heights and/or types of surfaces for the trolley to be driven over.

It is also possible to provide a multiple scissor mechanism via which a platform can be adjusted in height, which platform can be bordered and provides access for an operator and/or workers to take position on top of it. An operator panel then can also be provided for the operator to give forward or backward driving speed instructions, height adjustment instructions, etc. to a programmable control unit of the trolley. The control unit also comprises a storage medium for storing machine readable instructions.

It should be understood that various changes and modifications to the presently preferred embodiments can be made without departing from the scope of the invention, and therefore will be apparent to those skilled in the art. The scope of the invention is defined by the appended claims.

## Claims

1. Two-way horticulture trolley (1) for driving in different directions over different heights and/or types of surfaces, like paved floors and pipe-rails, comprising:
- a frame (10);
- track-wheels (11, 12) for driving the trolley (1) forward or backwards in a first direction (X) over tracks (R), like pipe-rails, that extend in the first direction (X) in between and along plant growing paths;
- floor-wheels (14) for driving the trolley (1) sideways in a second direction (Y) over a corridor (C), like a paved floor, that extends in the second direction (Y) along ends of the tracks (R);
- one or more driving motors (13, 18) configured to rotate the track- and/or floor-wheels (11, 12, 14) around their horizontal center axis for driving the trolley (1) forward or backwards respectively sideways; and
- a control unit (28) for controlling the one or more driving motors (13, 18),
**characterized in that,**
the floor-wheels (14) are each individually turnable around an own vertical axis relative to the frame (10) between at least the first and second direction (X, Y),
wherein one or more turning actuators are provided for controlling the floor-wheels (14) to turn individually around their own vertical axis between at least the first and second direction (X, Y) and vice versa.

2. Two-way horticulture trolley according to claim 1, wherein each of the floor-wheels (14) is mounted underneath on an own turntable (20) that is turnable around a center axis relative to the frame (10) between at least the first and second direction (X, Y), and which center axis of the turntable corresponds to said own vertical axis for each of the floor wheels (14) to turn around.

3. Two-way horticulture trolley according to claim 1 or 2, wherein each of the floor-wheels (14) lies eccentrically relative to said own vertical axis for each of the floor-wheels (14) to turn around.

4. Two-way horticulture trolley according to claim 3, wherein each of the floor-wheels (14) lies further away from a center point of the frame (10) than said own vertical axis for each of the floor wheels (14) to turn around, such that left and right ones of the floor-wheels (14) lie at maximum width from each other when both turned in the first direction (X), and such that front and back ones of the floor-wheels (14) lie at maximum distance from each other when turned in the second direction (Y).

5. Two-way horticulture trolley according to claims 4, wherein each of the floor-wheels (14) is turnable over maximum 90 degrees, with the first and second directions (X, Y) as outer limits.

6. Two-way horticulture trolley according to one of the preceding claims, wherein the control unit (28) is configured to individually turn a left-front-side and a right-back-side ones of the floor-wheels (14) in a clockwise direction, and to individually turn a right-front-side and a left-back-side one of the floor-wheels (14) in a counter-clockwise direction, and vice versa, during their individual turnings around their own vertical axis relative to the frame (10) between at least the first and second direction (X, Y).

7. Two-way horticulture trolley according to one of the preceding claims, wherein side walls of the frame (10) are provided with cut-outs (21) for the floor-wheels (14) to extend through during their turning movements.

8. Two-way horticulture trolley according to one of the preceding claims, wherein for each of the floor-wheels (14) an individual driving motor (18) is provided that is co-turnable therewith.

9. Two-way horticulture trolley according to one of the preceding claims, wherein for each of the floor-wheels (14) an individual turning actuator is provided, in particular a stepper motor.

10. Two-way horticulture trolley according to claim 9, wherein each individual turning actuator is co-turnable together with its respective one of the floor-wheels (14).

11. Two-way horticulture trolley according to one of the preceding claims, wherein each floor wheel (14) comprises a flexible rubber tire as tread.

12. Two-way horticulture trolley according to one of the preceding claims, wherein the frame (10) has an elongate shape, in particular rectangular, underneath which a front and back set of track-wheels (11, 12) is provided, and underneath which a front and back set of floor-wheels (14) is provided.

13. Two-way horticulture trolley according to one of the preceding claims, wherein at least some of the track-wheels (12) are formed by flange wheels that each comprises a cylindrical roller part (16) and a flange part (17), and wherein an outer diameter of the floor-wheels (14) is larger than an outer diameter of the flange parts (17).

14. Two-way horticulture trolley according to one of the preceding claims, wherein the trolley comprises a data collector (24) for automatically collecting health, growth and/or harvest data of plants the trolley (1) drives past.

## Patentansprüche

1. Zweiwege-Gartenbauwagen (1) zum Fahren in verschiedene Richtungen über verschiedene Höhen und/oder Oberflächenarten, wie befestigte Böden und Rohrschienen, Folgendes umfassend:
- einen Rahmen (10);
- Schienenräder (11, 12) zum Fahren des Wagens (1) vorwärts oder rückwärts in eine erste Richtung (X) über Schienen (R), wie Rohrschienen, die sich zwischen und entlang von Pflanzenanbauwegen in die erste Richtung (X) erstrecken;
- Bodenräder (14) zum Fahren des Wagens (1) seitwärts in eine zweite Richtung (Y) über einen Korridor (C), wie einen befestigten Boden, der sich entlang der Enden der Schienen (R) in die zweite Richtung (Y) erstreckt;
- einen oder mehrere Antriebsmotoren (13, 18), die dazu ausgelegt sind, die Schienen- und/oder Bodenräder (11, 12, 14) um ihre horizontale Mittelachse zu rotieren, um den Wagen (1) vorwärts oder rückwärts bzw. seitwärts anzutreiben; und
- eine Steuereinheit (28) zum Steuern des einen oder der mehreren Antriebsmotoren (13, 18),
**dadurch gekennzeichnet, dass**
die Bodenräder (14) jeweils einzeln um eine eigene vertikale Achse in Bezug zum Rahmen (10) zwischen mindestens der ersten und zweiten Richtung (X, Y) drehbar sind, wobei ein oder mehrere Drehstellglieder vorgesehen sind, um die Bodenräder (14) zu steuern, sich einzeln um ihre eigene vertikale Achse zwischen mindestens der ersten und zweiten Richtung (X, Y) und umgekehrt zu drehen.

2. Zweiwege-Gartenbauwagen nach Anspruch 1, wobei jedes der Bodenräder (14) unter einer eigenen Drehscheibe (20) montiert ist, die um eine Mittelachse in Bezug zum Rahmen (10) zwischen mindestens der ersten und zweiten Richtung (X, Y) drehbar ist, und wobei die Mittelachse der Drehscheibe der eigenen vertikalen Achse, um die sich jedes der Bodenräder (14) dreht, entspricht.

3. Zweiwege-Gartenbauwagen nach Anspruch 1 oder 2, wobei jedes der Bodenräder (14) in Bezug zur eigenen vertikalen Achse, um die sich jedes der Bodenräder (14) dreht, außermittig liegt.

4. Zweiwege-Gartenbauwagen nach Anspruch 3, wobei jedes der Bodenräder (14) von einem Mittelpunkt des Rahmens (10) weiter entfernt liegt als die eigene vertikale Achse, um die sich jedes der Bodenräder (14) dreht, sodass die linken und rechten Bodenräder (14) auf einer maximalen Breite zueinander liegen, wenn beide in die erste Richtung (X) gedreht sind, und sodass die vorderen und hinteren Bodenräder (14) in einer maximalen Entfernung zueinander liegen, wenn sie in die zweite Richtung (Y) gedreht sind.

5. Zweiwege-Gartenbauwagen nach Anspruch 4, wobei jedes der Bodenräder (14) um maximal 90 Grad drehbar ist, wobei die erste und zweite Richtung (X, Y) die Außengrenzen sind.

6. Zweiwege-Gartenbauwagen nach einem der vorstehenden Ansprüche, wobei die Steuereinheit (28) dazu ausgelegt ist, während ihrer einzelnen Drehungen um ihre eigenen Achsen in Bezug zum Rahmen (10) zwischen mindestens der ersten und zweiten Richtung (X, Y) ein linkes vorderes und ein rechtes hinteres Bodenrad (14) einzeln im Uhrzeigersinn zu drehen und ein rechtes vorderes und ein linkes hinteres Bodenrad (14) einzeln entgegen dem Uhrzeigersinn zu drehen und umgekehrt.

7. Zweiwege-Gartenbauwagen nach einem der vorstehenden Ansprüche, wobei Seitenwände des Rahmens (10) mit Ausschnitten (21) versehen sind, durch die sich die Bodenräder (14) während ihrer Drehbewegungen erstrecken.

8. Zweiwege-Gartenbauwagen nach einem der vorstehenden Ansprüche, wobei für jedes der Bodenräder (14) ein einzelner Antriebsmotor (18) vorgesehen ist, der damit mitdrehbar ist.

9. Zweiwege-Gartenbauwagen nach einem der vorstehenden Ansprüche, wobei für jedes der Bodenräder (14) ein einzelnes Drehstellglied vorgesehen ist, insbesondere ein Schrittmotor.

10. Zweiwege-Gartenbauwagen nach Anspruch 9, wobei jedes einzelne Drehstellglied zusammen mit seinem jeweiligen Bodenrad (14) mitdrehbar ist.

11. Zweiwege-Gartenbauwagen nach einem der vorstehenden Ansprüche, wobei jedes Bodenrad (14) einen flexiblen Gummireifen als Lauffläche umfasst.

12. Zweiwege-Gartenbauwagen nach einem der vorstehenden Ansprüche, wobei der Rahmen (10) eine längliche, insbesondere rechteckige, Form aufweist, unter welcher ein vorderer und hinterer Satz Schienenräder (11, 12) vorgesehen ist und unter welcher ein vorderer und hinterer Satz Bodenräder (14) vorgesehen ist.

13. Zweiwege-Gartenbauwagen nach einem der vorstehenden Ansprüche, wobei mindestens einige der Schienenräder (12) durch Flanschräder ausgebildet sind, die jeweils einen zylindrischen Rollenteil (16) und einen Flanschteil (17) umfassen, und wobei der Außendurchmesser der Bodenräder (14) größer ist als der Außendurchmesser der Flanschteile (17).

14. Zweiwege-Gartenbauwagen nach einem der vorstehenden Ansprüche, wobei der Wagen einen Datensammler (24) zum automatischen Sammeln von Daten bezüglich Gesundheit, Wachstum und/oder Ernte der Pflanzen, an denen der Wagen (1) vorbeifährt, umfasst.

## Revendications

1. Chariot d'horticulture à double sens (1) pour rouler dans différentes directions sur différentes hauteurs et/ou types de surfaces, comme des sols pavés et des rails tubulaires, comprenant :
- un cadre (10) ;
- des roues de rail (11, 12) pour entraîner le chariot (1) vers l'avant ou vers l'arrière dans une première direction (X) sur des rails (R), comme des rails tubulaires, qui s'étendent dans la première direction (X) entre et le long de voies de culture de plantes ;
- des roues au sol (14) pour entraîner le chariot (1) latéralement dans une seconde direction (Y) sur un couloir (C), comme un sol pavé, qui s'étend dans la seconde direction (Y) le long des extrémités des rails (R) ;
- un ou plusieurs moteurs d'entraînement (13, 18) conçus pour faire tourner les roues de rail et/ou au sol (11, 12, 14) autour de leur axe central horizontal pour entraîner le chariot (1) vers l'avant ou vers l'arrière, respectivement latéralement ; et
- une unité de commande (28) pour commander le ou les moteurs d'entraînement (13, 18),
**caractérisé en ce que,**
les roues au sol (14) peuvent chacune tourner individuellement autour d'un axe vertical propre par rapport au cadre (10) entre au moins la première et la seconde direction (X, Y), un ou plusieurs actionneurs de rotation étant fournis pour commander aux roues au sol (14) de tourner individuellement autour de leur propre axe vertical entre au moins la première et la seconde direction (X, Y) et vice-versa.

2. Chariot d'horticulture à double sens selon la revendication 1, chacune des roues au sol (14) étant montée en dessous sur un propre plateau tournant (20) qui peut tourner autour d'un axe central par rapport au cadre (10) entre au moins la première et la seconde direction (X, Y), et lequel axe central du plateau tournant correspondant audit axe vertical propre autour duquel chacune des roues au sol (14) tourne.

3. Chariot d'horticulture à double sens selon la revendication 1 ou 2, chacune des roues au sol (14) étant excentrée par rapport à son propre axe vertical autour duquel chacune des roues au sol (14) tourne.

4. Chariot d'horticulture à double sens selon la revendication 3, chacune des roues au sol (14) se trouvant plus loin d'un point central du cadre (10) que ledit axe vertical propre autour duquel chacune des roues au sol (14) tourne, de sorte que les roues au sol (14) gauche et droite se trouvent à la largeur maximale l'une de l'autre lorsqu'elles sont toutes deux tournées dans la première direction (X), et de sorte que les roues au sol (14) avant et arrière se trouvent à la distance maximale l'une de l'autre lorsqu'elles sont tournées dans la seconde direction (Y).

5. Chariot d'horticulture à double sens selon la revendication 4, chacune des roues au sol (14) pouvant tourner sur 90 degrés au maximum, les première et seconde directions (X, Y) étant les limites extérieures.

6. Chariot d'horticulture à double sens selon l'une des revendications précédentes, l'unité de commande (28) étant conçue pour faire tourner individuellement une roue avant gauche et une roue arrière droite parmi les roues au sol (14) dans le sens des aiguilles d'une montre, et pour faire tourner individuellement une roue avant droite et une roue arrière gauche parmi les roues au sol (14) dans le sens inverse des aiguilles d'une montre, et vice versa, pendant leurs rotations individuelles autour de leur propre axe vertical par rapport au cadre (10) entre au moins la première et la seconde direction (X, Y).

7. Chariot d'horticulture à double sens selon l'une des revendications précédentes, les parois latérales du cadre (10) étant pourvues de découpes (21) permettant aux roues au sol (14) de s'étendre lors de leurs mouvements de rotation.

8. Chariot d'horticulture à double sens selon l'une des revendications précédentes, pour chacune des roues au sol (14) un moteur d'entraînement individuel (18) étant fourni qui peut tourner avec elle.

9. Chariot d'horticulture à double sens selon l'une des revendications précédentes, pour chacune des roues au sol (14) un actionneur de rotation individuel étant fourni, en particulier un moteur pas à pas.

10. Chariot d'horticulture à double sens selon la revendication 9, chaque actionneur de rotation individuel pouvant tourner avec sa roue au sol (14) respective.

11. Chariot d'horticulture à double sens selon l'une des revendications précédentes, chaque roue au sol (14) comprenant un pneu en caoutchouc souple comme bande de roulement.

12. Chariot d'horticulture à double sens selon l'une des revendications précédentes, le cadre (10) ayant une forme allongée, en particulier rectangulaire, sous lequel un ensemble avant et arrière de roues de rail (11, 12) est fourni, et sous lequel un ensemble avant et arrière de roues au sol (14) est fourni.

13. Chariot d'horticulture à double sens selon l'une des revendications précédentes, au moins certaines des roues de rail (12) étant formées par des roues à boudin qui comprennent chacune une partie roulement cylindrique (16) et une partie boudin (17), et un diamètre extérieur des roues au sol (14) étant plus grand qu'un diamètre extérieur des parties boudins (17).

14. Chariot d'horticulture à double sens selon l'une des revendications précédentes, le chariot comprenant un collecteur de données (24) destiné à collecter automatiquement des données sur la santé, la croissance et/ou la récolte des plantes devant lesquelles le chariot (1) passe.
